# EUROPEAN PATENT SPECIFICATION

(11) **EP 2 404 662 B1**
(45) Date of publication and mention of the grant of the patent: **05.12.2012**
(21) Application number: 10169074.1
(22) Date of filing: 09.07.2010
(51) Int. Cl.: B01D 61/04, B01D 61/16, B01D 61/58, B01J 39/04, C02F 1/42, C02F 1/44, C02F 9/02, C02F 9/10, C02F 101/16, C02F 103/20

(54) **A method for removing ammonium nitrogen from organic waste water comprising liquid manure**
Verfahren zum Entfernen von Ammoniumstickstoff aus organischem Abwasser mit flüssigem Dung
Procédé de suppression d'ammonium-azote d'eaux usées organiques contenant du fumier liquide

(43) Date of publication of application: 11.01.2012
(73) Proprietor: RE-N Technology, 2960 Rungsted Kyst (DK)
(72) Inventor: Wennergreen, Bo, S-22592 Lund (SE); Christensen, Jens Tradsborg, DK-2960, Rungsted Kyst (DK)
(74) Representative: Trier, Mikkel Roed

(56) References cited:
- WO-A2-2004/089833
- JP-A- 2001 009 481
- US-A1- 2008 053 909
- François de Dardel and Thomas V. Arden: "Ion exchangers" In: "Ullmann's Encyclopedia of Industrial Chemistry, 5th edition", 1989, VCH, Weinheim, XP002612512, ISBN: 3-527-20114-9 vol. A14, pages 393-459, * page 400 *

## Description

The present invention relates to a method for removing ammonium nitrogen from organic waste water comprising liquid manure.

Wherever higher animals are gathered in substantial concentrations, such as in piggeries, the release of different forms of nitrogen due to urination and defaecation may pose environmental problems of varying scale. When leaving the animals, a considerable proportion of nitrogen in the manure is present in the form of urea. Shortly thereafter, however, urea is converted into ammonium and carbon dioxide in a pH-neutral mixture. In the following period, then, carbon dioxide leaves, the pH increases and ammonia will start to evaporate.

Ammonia is an irritant of eyes, nose and lungs and in high concentrations may cause disease or even death. When released in large amounts into the atmosphere and deposited by air and rain in oligotrophic ecosystems such as bogs, moores and heathlands, the species making up the original vegetation are displaced by nitrophilic ones.

Deposition of manure commonly takes place beneath the floor of a stable or sty with periodical relocation to a manure tank or lagoon. Commonly, droppings and urine are mixed so that the manure takes the form of slurry. Following storage, often for several months, the contents of the tank or lagoon are normally spread onto agricultural land as a fertilizer. Part of the nitrogen present will evaporate as ammonia resulting in an unpleasant odour and another part in the form of nitrate will possibly leach to the ground water or run off to watercourses, bodies of fresh water and the sea, giving rise to further problems of pollution and eutrophication.

To alleviate the adverse effects of excess nitrogen in the environment, many countries housing an industry of intensive animal husbandry, notably large piggeries, have implemented provisions to the effect that no more than a specified amount of manure be spread per unit area of field. However, since holdings of intensive large-scale animal husbandry in a given region often relies on imported concentrates for feed, the regional pool of nitrogen typically increases far beyond what can be utilized and accommodated on the agricultural land available in the region in question.

Therefore, considerable attention has been directed in recent decades to the development of procedures, whereby nitrogen in manure can be selectively removed and retained in a form suitable for transport to regions with a smaller nitrogen load for use as a fertilizer.

When nitrogen is to be recovered from manure, an initial fractionation in a dry and a liquid fraction is normally effected by various means as a pronounced proportion of nitrogen is present in the liquid fraction of manure. The dry manure fraction arising as a result of said fractionation may be used e.g. as a soil conditioner rich in phosphorus, as a biomass fuel, or as a raw material for a biogas plant.

According to known methods nitrogen has traditionally been removed from the liquid manure fraction by ammonia stripping and/or precipitation of ammonium salts for direct use as a fertilizer effected by addition of a range of extraneous chemicals.

In order to remove ammonium nitrogen from liquid manure with the expenditure of less energy and without relying on complex industrial equipment, the use of natural ion exchangers for scavenging ammonium ions by adsorption has been suggested. Thus, the International patent application WO 92/12944 discloses the use of a natural cation exchanger, notably the mineral glauconite, for removing ammonium nitrogen from an aqueous phase of liquid manure. Following steps of filtration, flocculation and sedimentation, an aqueous phase presenting a moderate nitrogen content is applied to the ion exchanger. The ion exchanger may be regenerated, preferably with an aqueous solution of CaCl₂, and the eluate is either stored as a separate product or united with a thick slurry originating from an initial separation of manure into different phases.

The methods of the prior art making use of natural ion exchangers for the removal of ammonium nitrogen from liquids containing manure entertained great hopes. Alas, they did not come up to the great expectations and have not been put to use in a commercial scale. Several major problems frustrated the attempts to obtain a functional operation of natural ion exchangers in the clearing away of ammonium from liquid manure.

When used for the purpose in question, beds of natural ion exchanger clog up by fine material arising from their own disintegration as well as by particles of dry matter, partly of organic nature, from the liquid manure. The percolation of the liquid to be cleansed is seriously impeded, so that the flow rate through the bulk of ion exchanger and thus its efficiency shrinks to an unsatisfactory level, in general to less than 3 mm/min. For each backflushing and treatment of the natural ion exchanger beds with regenerant solution the withering of the ion exchanger material progresses such as to aggravate the problem of occlusion of the plant, yielding a pattern of inhibited and uneven flow through different parts of the ion exchanger beds.

Another drawback of the natural ion exchangers applied in the removal of ammonium nitrogen from liquid manure resides in their inherently low cation exchange capacity, often falling short of 1 molar equivalent per litre. It is impossible to attain a satisfactory concentration factor of ammonium during the process of ion exchanging; in practice it hardly ever exceeds a value of 3 and generally is not much more than 1. Following release of the adsorbed ammonium from the ion exchanger into a regenerant solution, the final volume of this liquid typically is not substantially smaller than the volume of the liquid to be treated at the beginning of the process.

Due to the considerable environmental and commercial interest involved, many experiments have been conducted in order to remedy the failings of processes employing natural ion exchangers for removal of ammonium nitrogen from liquid manure, but this has proven hard to accomplish. Actually, when it comes to the treatment of liquids showing a moderate to high content of ammonium as is encountered in liquid manure, the very principle of ion exchange has been extensively abandoned, i.a. in favour of direct precipitation of salts of ammonium by addition of suitable compounds to the liquid to be treated. Thus, also the use of synthetic ion exchangers for removal of ammonium by adsorption from organic wastewater has been limited to finishing treatments clearing residual, dilute ammonium from liquids, which have undergone preceding steps of another nature, whereby the chief part of the ammonium nitrogen has already been disposed of; see in this regard the international application WO 2004/089833 A2, and the US application US 2008/053909 A1.

The general stance taken within the art is exemplified by the European application EP 0114038A. Said application discloses that the use of ion exchanging is only appropriate at ammonium concentrations less than 15 mM, which is also less than what is found in most liquid manures. At higher concentrations, direct precipitation of ammonium salts by addition of chemicals is prescribed.

In view of the above, the object of the present invention is to provide an environmentally friendly procedure for removing ammonium nitrogen from liquid manure, which procedure is efficient and durable and requires only a modest consumption of energy and extraneous, industrial chemicals.

To meet this object, a method for removing ammonium nitrogen from organic waste water comprising liquid manure is provided, which method comprises the steps of providing organic waste water comprising liquid manure with a content of ammonium nitrogen; applying said waste water to an organic, synthetic ion exchanger adsorbing more than 1.2 eq/I (molar equivalents per litre), preferably 2.0 eq/I or more, in use; and allowing ammonium nitrogen from said waste water to adsorb to said ion exchanger, wherein the concentration of ammonium nitrogen in said waste water exceeds 3 g/l at the time of application of said waste water to said ion exchanger.

It has surprisingly been found that the use of an organic, synthetic ion exchanger makes it possible to remove ammonium nitrogen at a high flow rate and concentration factor from high-ammonium organic waste water containing liquid manure, and in such a manner that these favourable properties of the ion exchanger persist even when it is repeatedly regenerated and exposed to the liquid to be treated for an extended period of time. In view of the problems hitherto encountered when dealing with natural ion exchangers for the purpose in question, the amazing durability and effectiveness found with beads of organic, synthetic ion exchanger is much more than what could be hoped for.

The organic waste water has a content of organic matter of 0.5-8 % (w/w), preferably 1-3 % (w/w), at the time of application of said waste water to the ion exchanger, said organic matter being dissolved or in particles of a maximum extension of 25 µm. Surprisingly, such a considerable content of organic matter is reconcilable with the sustained functioning of the bed of organic, synthetic ion exchanger at a high flow rate and ion exchange capacity, despite the fact that organic, synthetic ion exchangers are manufactured and normally used for treatment in industry and research of liquids, which are substantially devoid of particles and organic matter.

Hereby, a robust and effective method for removing ammonium nitrogen from liquid manure is provided, so that adverse effects relating to the discharge of various nitrogen compounds attached to the organic decomposition of manure may be controlled.

The liquid manure present in the organic waste water to be treated according to the invention may originate from any animal, but most often stems from livestock, e.g. pigs, cows or poultry. Prior to its application to the ion exchanger said manure may be admixed with other kinds of organic waste, such as municipal sewage.

The organic, synthetic ion exchanger may be installed at a central plant receiving manure-containing waste water from several external sources or it may be put up in a farm setting to be associated with a stable, be it a traditional or a loose-housing system, or a pigsty, be it indoors or outdoors. By the latter association the possibility of a predictable and stable supply of fresh manure is assured.

Preferably, the liquid manure results from a fractionation of manure, such as to restrict the occurrence of coarse, solid matter. Optionally, the manure is briefly stored in a reservoir before fractionation. The fractionation may be achieved by means of any kind of separator, optionally a screen shaker separator. The manure may also be separated in a decanter, optionally following treatment in a screw press. In a preferred embodiment, the liquid manure is pasteurised after fractionation and before being applied to the ion exchanger. This is done in order to inhibit microbiological growth and thus the formation of biofilms and particulate colonies in the bed of ion exchanger.

Advantageously, the liquid manure is fractionated and, after shortly residing in one or more buffer tanks, pasteurised and applied to the ion exchanger within a period from 2 days to 5 weeks after the occurrence of the underlying, causative defecation and urination to limit the emission of ammonia and assure that the manure is still relatively fresh and lends itself to fractionation. Processing the manure at such an early stage presents the additional advantage that the emission of methane and laughing gas, which are greenhouse gases 21 and 289 times as potent as carbon dioxide, respectively, is extensively limited.

The average size of substantially all solid particles in the liquid manure to be applied to the ion exchanger preferably is equal to or less than 25 µm, most preferred less than 10 µm, in order not to restrict the flow of liquid through the bed of ion exchanger and its ion exchange capacity.

The organic, synthetic ion exchanger is a cation exchanger preferably made from a gel resin, such as styrene crosslinked by addition of divinylbenzene at the polymerisation process and with strongly acidic functional groups, but may also be of a macroporous type. Moreover, one or more anion exchangers may also be present in the plant accommodating the cation exchanger.

According to a preferred embodiment of the invention, the ion exchanger is brought on Na⁺-form prior to the application of the waste water to the ion exchanger. For instance, if it has been pre-loaded with H⁺ ions or is entirely virgin it may be treated with a solution of sodium chloride, sodium nitrate or sodium sulphate. Other easily soluble cations, e.g. potassium, which in combination with the applied ion exchanger resin are suitable for selective exchange of ammonium ions from the liquid to be treated, may also come into consideration for preloading of the ion exchanger. Furthermore, older organic waste water rich in ammonia could be applied to a separate bed of organic, synthetic ion exchanger on H⁺-form.

In an advantageous embodiment, the ion exchanger is regenerated, following adsorption of ammonium ions onto it, with a solution of NaNO₃ of a molarity of 2-8 M, and/or with a solution of NaCl of a molarity of 2-4 M, and/or with a solution of Na₂SO₄ of a molarity of 1-2.5 M. Surprisingly, the inventors have realized that the organic, synthetic ion exchanger in the present application actually tolerates such very strong regenerant solutions despite express exhortations in the directions for use given by producers of synthetic ion exchangers that the latter only be regenerated with much weaker solutions in order not to destroy the ion exchanger as a result of excessive osmotic shock. The possibility of using strong regenerant solutions is a strongly contributory factor in achieving a high concentration factor. Besides, strong saline solutions effectively inhibit the establishment of most kinds of microbiological cultures in the bed of ion exchanger, so that the preceding step of pasteurizing the waste water to be treated may actually often be dispensed with.

The use of NaNO₃ as a regenerant is particularly preferred in that ammonium nitrate results as a product. This is much in demand as a high-nitrogen fertilizer and as an explosive for coal and steel mining, quarrying, and construction works.

According to a favourable embodiment, the step of applying waste water to the ion exchanger and the step of regenerating the ion exchanger are performed by turns in a series comprising more than 10, preferably more than 25, most preferred more than 50 repetitions of said steps, wherein the ion exchanger is not replaced during the duration of such a series. The inventors have unexpectedly found that the ion exchanger stands up to such a treatment without any significant impairment of its performance.

Preferentially, the concentration of ammonium nitrogen in the organic waste water comprising liquid manure exceeds 4 g/l, preferably 5 g/I. Said concentrations are much higher than that of organic waste water normally treated in sewage works. The use of a durable ion exchanger with a high exchange capacity, i.e. 1.2 molar equivalents per liter, preferably 2.0 molar equivalents per liter, renders possible to propitiously treat liquids with high concentrations of ammonium by way of ion exchanging, which would otherwise not have been practical and profitable.

In a preferred embodiment, the organic waste water shows a pH in the range of 6.5-8.0 at the time of application of said waste water to the ion exchanger. To assure that the organic waste water comprising liquid manure is treated at a stage, where the predominant part of the nitrogen contained therein is present in the form of ammonium, it should not be left to turn alkaline. In case that a substantial part of the ammonium present has been allowed to convert to ammonia, it will be ineffective to apply the organic waste water to the ion exchanger on Na⁺-form. Instead, organic waste water containing liquid manure rich in ammonia as a result of extended storage could as mentioned above be applied to a separate bed of organic, synthetic ion exchanger on H⁺-form. On the other hand, organic waste water containing fresh, neutral manure, wherein the nitrogen is predominantly present in the form of ammonium, must not be applied to an ion exchanger on H⁺-form, even though this is the default loading of many commercial ion exchangers. Such applications will result in an effervescence of carbon dioxide of explosive character.

According to a preferred embodiment of the invention, the beads of the ion exchanger have a mean particle size of 0.4-1.0 mm, preferably 0.6-0.7 mm, and a uniformity coefficient of 1.2 or less, preferably 1.1 or less. The uniformity coefficient is defined as the relation between the particle size corresponding to the mesh at which 60% of the particles pass a sieve, and the particle size corresponding to the mesh at which 10% of the particles pass a sieve. If the beads are too large, the accessible surface area of the beads and thus the total exchange capacity of the bed of ion exchanger will be insufficient, whereas beads, which are too small, will float atop the liquid to be treated rather than being pervaded by it. Further, a low uniformity coefficient assures that the particles of the organic, synthetic ion exchanger are not packed too tightly and are less prone to clogging, especially when compared to natural ion exchangers. A much higher flow rate is made possible when employing an organic, synthetic ion exchanger. Whereas channeling at a low flow rate, and turbulence and flushing out of minor constituent particles at a high flow rate tend to occur in a bed of natural ion exchanger, the inventors have discovered that these phenomena are much less of a problem with organic, synthetic ion exchangers. Further, in a favourable embodiment, the beads of ion exchanger resin may be unpacked with regular intervals by blowing through compressed air from beneath the bed of ion exchanger.

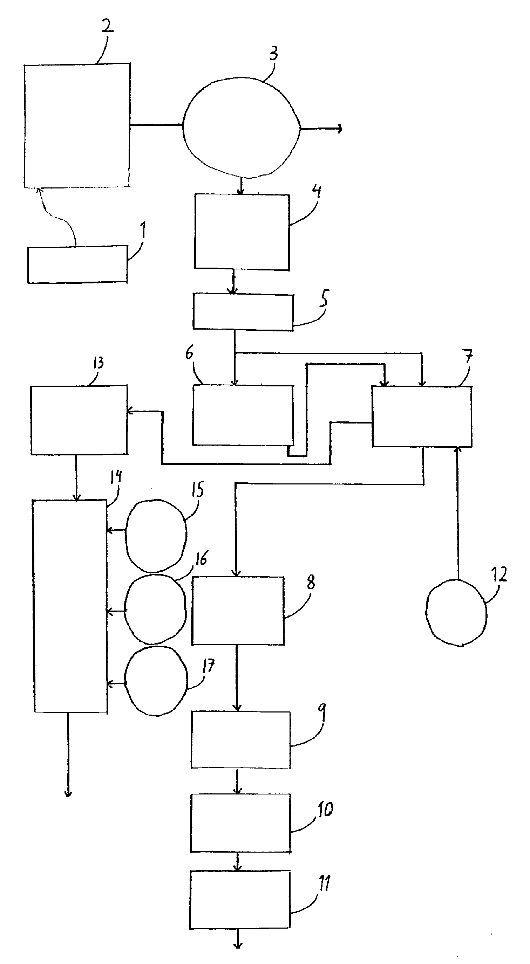

In the following, a preferred embodiment of the invention will be illustrated by reference to the non-limiting figure. The figure shows a schematic view of an embodiment of a plant for carrying out the method according to the invention.

Referring now to the figure, the main features of the illustrated plant are referenced by numbers as follows:

1 is a site for receipt of liquid manure and other materials entering into the organic waste water to be treated; 2 is a buffer tank; 3 is a decanter for separation of a solid phase from a liquid phase to be further treated; 4 is a buffer tank; 5 is a pasteurization unit; 6 and 7 are containers, each with a bed of organic, synthetic ion exchanger, wherein 6 may represent an array of multiple ion exchanger containers arranged in series or in parallel; 8 is a buffer tank; 9 is an ultrafiltration unit; 10 is an reverse osmosis unit; 11 is a buffer tank; 12 is a vessel containing a solution for regeneration of the ion exchanger; 13 is a buffer tank; 14 is a mixing tank; 15 is a vessel containing a solution of a formulation of nitrogen; 16 is a vessel containing a solution of a formulation of phosphorus; 17 is a vessel containing a solution of a formulation of potassium. In addition to the illustrated directional flows, further flows, which have not been shown for the sake of clarity, exist from 12 to 6 and from 6 to 13.

A description of a preferred embodiment of the process according to the invention as carried out in the plant of the figure will now be given.

Liquid manure is received at the site 1 together with other organic waste materials, from where it is pumped or loaded as required to the buffer tank 2. It is delivered by truck from sources that are external to the plant. When arriving, the manure is of an age of 1 to 15 days and presents itself as a relatively fresh, thin slurry, wherein a pronounced majority of nitrogen is present as ammonium, pH is neutral and the content of carbonic acid is high. After residing in the buffer tank 2 for no more than a few days, portions of the mixture of organic waste materials are conveyed with regular intervals to the decanter 3 to be separated into two fractions. One fraction is a solid fraction and the other fraction is a liquid fraction having substantially no particles larger than 25 µm. The liquid fraction is stored in the buffer tank 4 for only long enough to ensure that substantially all urea from the manure is converted to ammonium and carbon dioxide. The solid fraction is transported to an external storage and plays no role in the ensuing process of the present invention.

From the buffer tank 4 the liquid fraction is pumped to the pasteurization unit 5 to be heated to at least 72 °C for not less than 15 seconds, so that the microorganisms present in the liquid are killed off or substantially reduced. In this way the establishment of bacterial and fungal colonies in the bed of ion exchanger is avoided or at least retarded.

Following pasteurization, the liquid fraction, containing ammonium nitrogen in a concentration of 4 g/I and 2% (w/w) of organic matter at this stage, is pumped to the containers 6 and 7, which in the present embodiment are parallelly arranged and have a bed of organic, synthetic ion exchanger within them. In case that large quantities of organic waste water were to be treated, further containers connected in parallel might have been present. The ion exchanger is made of a gel resin on Na⁺-form, having as its matrix styrene crosslinked by addition of divinylbenzene and having as functional group sulfonic acid. The total exchange capacity of the ion exchanger amounts to about 2 molar equivalents per litre, and the average bead size is about 0.65 mm, showing a uniformity coefficient of about 1.1. A volume of approximately 1.6 m³ of ion exchanger is present in each container, and the inner cross-sectional area of each container at the top level of the bed of ion exchanger is around 1.8 m².

The liquid to be treated is pumped to the top of each container such as to percolate through the bed of synthetic, organic ion exchanger by the force of gravity at a flow rate of 3-10 cm/min, which is 6 to 10 times higher than the flow rate attainable with natural ion exchangers. The operation proceeds at atmospheric pressure; however, at regular intervals the bed of ion exchanger is blown through by compressed air at a maximum of 2.0 bars from the bottom of the container in order to maintain a porous, homogenous overall structure of the bed.

The permeate, from which about 85% of ammonium nitrogen and about 95% of total potassium are removed, is led to the buffer tank 8; otherwise, its use as a dilute fertilizer could have been desirable. Alternatively, it might also run through a bed of anion exchanger to remove phosphate ions. Subsequently, the permeate is adjusted to a prescribed water quality in the ultrafiltration unit 9 and the reverse osmosis unit 10 to finally arrive in the buffer tank 11, from which it is discarded or put to a suitable use according to local demands.

In the event that the plant for removal of ammonium nitrogen from organic waste comprising liquid manure had been associated with a farm, the permeate could advantageously have been put to use in the continuous or intermittent flushing of manure from beneath the floor of a stable or pigsty with an eye to restricting the conversion of nitrogen in the manure from ammonium into ammonia. Preferably, the flushed manure including the permeate used for flushing would form the basis of the organic waste water to be applied to the ion exchanger, possibly after a brief stay in a reservoir with subsequent fractionation. Suitably, the flow of liquid manure, provided by said flushing using permeate from the ion exchanger, would have been timed such as to ascertain the conversion of urea contained in the manure into ammonium and carbon dioxide, while still restricting the conversion of ammonium into ammonia.

In this way, the permeate might have been turned to account in a most propitious way, as the flow of manure would henceforth be inherently integrated into the process for removal of ammonium nitrogen. Consequently, the manure would enter into a regular flow and would still be fresh when applied to the ion exchanger. Hereby, the emission of ammonia to the air of the stable or pigsty might be reduced by as much as 60% or more, and the ratio of ammonium to ammonia in the liquid manure to be treated would be sufficiently high to assure that a substantial part of the nitrogen present might be scavenged as ammonium ions in the ion exchanger. Conversely, if manure stored in a traditional way for a longer period in a manure tank or lagoon was to be cleansed from nitrogen by use of an ion exchanger, ammonia would be more prevalent and it would be necessary to include a step comprising pretreatment with an acid or a step comprising separate treatment in a bed of H⁺-loaded ion exchanger to be regenerated with a solution of phosphoric acid or sulphuric acid if a similar effectiveness was to be attained.

Moreover, by recycling permeate instead of flushing with water, substantial savings might be gained and furthermore the flushing with permeate would not add to the overall volume of manure, as the fluid used in flushing itself originates from manure.

In the present embodiment, the supply of waste water to a bed of ion exchanger is interrupted when ammonium in a pre-specified concentration as determined by online measurements begins to leak from its bottom. Regeneration of the ammonium-saturated container is started while a fresh container is switched in to replace it In the ion exchange treatment of waste water. In this way a continuous operation of the plant is effected.

Before regeneration, however, the respective bed of ion exchanger is flushed with one bed volume of water such as to rinse out particulate matter and organic material from the ion exchanger.

The regeneration is performed with NaNO₃ in a concentration of about 4M, corresponding to a saline saturation of about 50%, which is introduced to the bottom of the ion exchanger container from the vessel 12. At such a concentration, bacteria and fungi that might have been present in the bed of ion exchanger are killed off to an extent that the preceding step of waste water pasteurization in this case could have been omitted. The applied ions of sodium act such as to replace adsorbed ions of potassium and subsequently ions of ammonium as well as some amino acids from the ion exchanger. The supply of saline solution is upheld until a pre-specified low level of ammonium is reached in the eluate leaving the bed of ion exchanger, whereupon the latter is rinsed again with water to clear it from sodium nitrate. Then the ion exchanger is ready again for treatment of the organic waste water.

Said rinsing water and the eluate is led to the buffer tank 13 as a solution of NH₄NO₃ and KNO₃ in a concentration of 6-8%. Subsequently, it is brought to the mixing tank 14, wherein a high-grade fertilizer is produced by adjusting the proportions in said solution of the most prevalent macronutrients. Suitable formulations of nitrogen, phosphorus and potassium are supplied from the vessels 15, 16, and 17, respectively, and other nutrients might have been added as well.

When operating according to the procedure outlined above, a very high proportion of the ammonium ions contained in six bed volumes of organic waste water comprising liquid manure may be adsorbed to a single bed of organic, synthetic ion exchanger and be released into one bed volume or less of regenerant solution. In this way a concentration factor may be obtained, which is many times higher than the one achievable with natural ion exchangers.

The invention will now be illustrated by way of the following non-limiting examples.

### Examples

### Separation efficiency of selected nutrients

A plant for carrying out the method according to the invention was set up at Wageningen University, Swine Research Centre Sterksel, Netherlands. Incoming pig manure one week old was separated into a solid and a liquid fraction with the aid of a decanter. The liquid fraction was shortly stored in a buffer tank, from which it was pumped onto an organic, synthetic ion exchanger.

The ion exchanger was constituted by beads of a gel resin on Na⁺-form, having as their matrix styrene crosslinked by addition of divinylbenzene and presenting as functional group sulfonic acid. The total exchange capacity of the ion exchanger amounted to approximately 2 molar equivalents per litre, while the average bead size was about 0.65 mm. The uniformity coefficient of the bulk of ion exchanger beads was about 1.1. A volume of approximately 1.6 m³ of ion exchanger was present in each container in a row of containers, and the inner cross-sectional area of each container at the top level of the bed of ion exchanger was approximately 1.8 m².

The liquid to be treated was pumped to the top of each container such as to percolate through the beds of synthetic, organic ion exchanger by the force of gravity at a flow rate of approximately 7 cm/min. Upon saturation of the respective beds of ion exchanger, they were regenerated with a solution of NaNO₃ at a concentration of about 4 M, yielding an eluate with nutrients, which had been adsorbed by the ion exchanger.

The separation efficiency is a measure of the proportion of the mass input per nutrient that ends up in the eluate after being treated according to the above procedure. The separation efficiency was calculated by dividing the mass of nutrient in the eluate with the mass input of the nutrient.

**Test 1: A total of 7304 kg of liquid fraction with an organic matter content of 1.6% (w/w) and an ammonium nitrogen content of 4.3 g/I was treated.**

| Nutrient | Total N | Total K | NH₄-N |
|---|---|---|---|
| Separation efficiency (%) | 64 | 97 | 87 |

**Test 2: A total of 6476 kg of liquid fraction presenting an organic matter content of 1.0% (w/w) and an ammonium nitrogen content of 1.9 g/l was treated.**

| Nutrient | Total N | Total K | NH₄-N |
|---|---|---|---|
| Separation efficiency (%) | 60 | 93 | 89 |

As appears, very high separation efficiencies for potassium as well as ammonium nitrogen were found.

### Resistance of ion exchanger against osmotic shocks

A test was made to find out how repeated osmotic shocks would affect the organic, synthetic ion exchanger. Solutions of 4 M NaNO₃ and 1% (w/w) of NH₄Cl were applied by turns every 10 minutes to a bed of organic, synthetic ion exchanger. 50 cycles were run, meaning that the ion exchanger was subjected to 100 shifts of solution, which may each be considered an osmotic shock. Subsequently, a random sample of ion exchanger beads was sent to the manufacturer for analysis. It was found that approximately 5% of the beads were cracked. However, the original content of uncracked beads in the virgin ion exchanger was only guaranteed to a minimum proportion of 95%. Accordingly, no significant deteriorating effect of the osmotic shock treatment was found.

### Persistence of capacity and flow

Even after 12 months of continuously full scale processing of liquid manure in a plant operating according to the method of the invention and without any replacement of ion exchanger material from the plant, no problems related to lowered ion exchange capacity, decreased flow rate or bacterial growth turned up.

## Claims

1. A method for removing ammonium nitrogen from organic waste water comprising liquid manure, which method comprises the steps of
(i) providing organic waste water comprising liquid manure with a content of ammonium nitrogen;
(ii) applying said waste water to an organic, synthetic ion exchanger adsorbing, in use, more than 1.2 eq/I, preferably more than 2.0 eq/I; and
(iii) allowing ammonium nitrogen from said waste water to adsorb to said ion exchanger,
wherein the concentration of ammonium nitrogen in said waste water exceeds 3 g/l at the time of application of said waste water to said ion exchanger, and wherein the organic waste water has a content of organic matter of 0.5-8 % (w/w), preferably 1-3 % (w/w), at the time of application of said waste water to the ion exchanger, said organic matter being dissolved or being in particles of a maximum extension of 25 µm.

2. The method according to claim 1, further comprising the step of bringing the ion exchanger on Na⁺-form prior to the application of said waste water to the ion exchanger.

3. The method according to any one of the preceding claims, wherein, following step (iii), the ion exchanger is regenerated with a solution of NaNO₃ of a molarity of 2-8 M, and/or with a solution of NaCl of a molarity of 2-4 M, and/or with a solution of Na₂SO₄ of a molarity of 1-2.5 M.

4. The method according to claim 3, wherein step (iii) and said step of regenerating the ion exchanger are performed by turns in a series comprising more than 10, preferably more than 25, most preferred more than 50 repetitions of said steps and wherein the ion exchanger is not replaced during the duration of said series.

5. The method according to any one of the preceding claims, wherein the concentration of ammonium nitrogen in the organic waste water exceeds 4 g/l, preferably 5 g/l.

6. The method according to any one of the preceding claims, wherein the organic waste water shows a pH in the range of 6.5-8.0 at the time of application of said waste water to the ion exchanger.

7. The method according to any one of the preceding claims, wherein the beads of the ion exchanger have a mean particle size of 0.4-1.0 mm, preferably 0.6-0.7 mm, and a uniformity coefficient of 1.2 or less, preferably 1.1 or less.

## Patentansprüche

1. Verfahren zum Entfernen von Ammonium-Stickstoff aus organischem Abwasser, das flüssigen Dung aufweist, wobei das Verfahren die folgenden Schritte aufweist:
(i) Bereitstellen von organischem Abwasser, das flüssigen Dung mit einem Anteil von Ammonium-Stickstoff aufweist;
(ii) Gießen des Abwassers auf einen organischen, synthetischen Ionentauscher, an dem sich bei Verwendung mehr als 1,2 äq/1, vorzugsweise mehr als 2,0 äq/1, adsorbieren und
(iii) Ammonium-Stickstoff aus dem Abwasser an dem Ionentauscher adsorbieren lassen,
wobei die Konzentration des Ammonium-Stickstoffs im Abwasser 3 g/l zu dem Zeitpunkt, an dem das Abwasser auf den Ionentauscher gegossen wird, überschreitet, und wobei das organische Abwasser einen Anteil an organischem Material von 0,5-8 % (w/w), vorzugsweise 1-3 % (w/w) zu dem Zeitpunkt, an dem das Abwasser auf den Ionentauscher gegossen wird, hat, wobei das organische Material gelöst ist oder in Partikeln mit einer maximalen Ausdehnung von 25 µm vorliegt.

2. Verfahren nach Anspruch 1, ferner aufweisend den Schritt, in dem der Ionentauscher in Na⁺-Form gebracht wird, bevor das Abwasser auf den Ionentauscher gegossen wird.

3. Verfahren nach einem der vorhergehenden Ansprüche, bei dem nachfolgend auf Schritt (iii) der Ionentauscher mit einer NaNO₃-Lösung mit einer Molarität von 2-8 M und/oder mit einer NaCl-Lösung mit einer Molarität von 2-4 M und/oder mit einer Na₂SO₄-Lösung mit einer Molarität von 1-2,5 M regeneriert wird.

4. Verfahren nach Anspruch 3, wobei Schritt (iii) und der Schritt, in dem der Ionentauscher regeneriert wird, abwechselnd in einer Serie von mehr als 10, vorzugsweise mehr als 25, am meisten bevorzugt von mehr als 50 Wiederholungen der Schritte wiederholt werden und der Ionentauscher während der Dauer dieser Serie nicht ausgetauscht wird.

5. Verfahren nach einem der vorhergehenden Ansprüche, wobei die Konzentration an Ammonium-Stickstoff in dem organischen Abwasser 4 g/l, vorzugsweise 5 g/l, überschreitet.

6. Verfahren nach einem der vorhergehenden Ansprüche, wobei das organische Abwasser einen pH-Wert im Bereich von 6,5-8,0 zum Zeitpunkt des Aufgusses des Abwassers auf den Ionentauscher zeigt.

7. Verfahren nach einem der vorhergehenden Ansprüche, wobei die Kügelchen des Ionentauschers eine durchschnittliche Korngröße von 0,4-1,0 mm, vorzugsweise 0,6-0,7 mm, und eine Ungleichförmigkeitszahl von 1,2 oder weniger, vorzugsweise 1,1 oder weniger, haben.

## Revendications

1. Procédé de suppression d'ammonium-azote d'eaux usées organiques contenant du fumier liquide, lequel procédé comporte les étapes comprenant le fait de :
(i) fournir des eaux usées organiques contenant du fumier liquide, ayant une teneur en ammonium-azote ;
(ii) appliquer lesdites eaux usées à un échangeur d'ions organique, synthétique adsorbant, lors de son utilisation, plus de 1,2 eq/l, de préférence, plus de 2,0 eq/l ; et
(iii) permettre à l'ammonium-azote provenant desdites eaux usées d'être adsorbé par ledit échangeur d'ions,
dans lequel la concentration en ammonium-azote dans lesdites eaux usées dépasse 3 g/l au moment de l'application desdites eaux usées au dit échangeur d'ions, et dans lequel les eaux usées organiques présentent une concentration en matière organique de 0,5 à 8 % en poids (w/w), de préférence, de 1 à 3 % en poids (w/w) au moment de l'application desdites eaux usées à l'échangeur d'ions, ladite matière organique étant dissoute ou se trouvant sous la forme de particules d'une grandeur maximale de 25 µm.

2. Procédé selon la revendication 1 comprenant, de plus, l'étape comportant d'amener l'échangeur d'ions sous la forme de Na⁺ avant l'application desdites eaux usées à l'échangeur d'ions.

3. Procédé selon l'une quelconque des revendications précédentes, dans lequel, après l'étape (iii), l'échangeur d'ions est régénéré avec une solution de NaNO₃ d'une molarité de 2 à 8 M, et/ou avec une solution de NaCl d'une molarité de 2 à 4 M, et/ou avec une solution de Na₂SO₄ d'une molarité de 1 à 2,5 M.

4. Procédé selon la revendication 3, dans lequel l'étape (iii) et ladite étape de régénération de l'échangeur d'ions sont exécutées tout à tour dans une série comportant plus de 10, de préférence, plus de 25, avec la plus grande préférence, plus de 50, fois la répétition desdites étapes et dans lequel l'échangeur d'ions n'est pas remplacé pendant la durée desdites séries.

5. Procédé selon l'une quelconque des revendications précédentes, dans lequel la concentration en ammonium-azote des eaux usées organiques excède 4 g/l, de préférence, 5 g/l.

6. Procédé selon l'une quelconque des revendications précédentes, dans lequel les eaux usées organiques présentent un pH se situant dans la plage de 6,5 à 8,0 au moment de l'application desdites eaux usées à l'échangeur d'ions.

7. Procédé selon l'une quelconque des revendications précédentes, dans lequel les grains de l'échangeur d'ions présentent une dimension moyenne de particules de 0,4 à 1,0 mm, de préférence, de 0,6 à 0,7 mm, et un coefficient d'uniformité de 1,2 ou moins, de préférence, de 1,1 ou moins.
